# EUROPEAN PATENT APPLICATION

(11) **EP 4 410 516 A1**
(43) Date of publication of application: **07.08.2024**
(21) Application number: 22876399.1
(22) Date of filing: 28.09.2022
(51) Int. Cl.: B29C 48/92, B29C 48/21, B29C 48/305, B29C 48/88, B32B 27/30, B32B 27/36, B32B 37/14

(54) **EXTRUDED RESIN LAMINATED FILM AND METHOD FOR PRODUCING SAME**

(30) Priority: 29.09.2021 JP 2021159709
(71) Applicant: Kuraray Co., Ltd., Kurashiki-shi, Okayama 710-0801 (JP)
(72) Inventor: FUNAZAKI, Kazuo, Tainai-shi Niigata 959-2691 (JP); KODERA, Jumpei, Tainai-shi Niigata 959-2691 (JP); OZAWA, Yushi, Tainai-shi Niigata 959-2691 (JP); YAMASHITA, Kouhei, Tainai-shi Niigata 959-2691 (JP); NINOMIYA, Masato, Tainai-shi Niigata 959-2691 (JP)
(74) Representative: Müller-Boré & Partner Patentanwälte PartG mbB
(86) International application number: PCT/JP2022/036309
(87) International publication number: WO 2023/054533

(57) **Abstract**

The present disclosure provides a method for producing an extruded resin laminated film with small optical distortion and small change in orientation axis of the optical distortion. A laminate including a (meth)acrylic resin-containing layer laminated on at least one side of a polycarbonate-containing layer is coextruded from a T-die in a molten state, cooled using three or more cooling rolls, and the obtained extruded resin laminated film is wound up by a winding roll. The laminate is sandwiched between the first cooling roll and the second cooling roll without generating a bank, and a metal elastic roll is used as the first cooling roll, and a metal rigid roll is used as the second cooling roll. The overall temperature of the laminate when peeled off from the final cooling roll is set to lower than the glass transition temperature of the polycarbonate-containing layer by 40 to 5°C. The peripheral velocity of the second cooling roll is represented as V2, the peripheral velocity of the third cooling roll as V3, and the peripheral velocity of the winding roll as V4. Both V3/V2 and V4/V2 are set to 0.980 to 1.000.

## Description

### Technical Field

The present disclosure relates to an extruded resin laminated film and a method for producing the same.

### Background Art

In displays including flat panel displays such as liquid crystal displays, and touch panel displays that combine such flat panel displays and touch panels (also referred to as touch screens), a protective film made of transparent resin may be provided on the front side, from the viewpoints such as surface scratch prevention, workability, and weight reduction. In the present description, this protective film is also referred to as a "protective film for liquid crystal displays". This protective film is required to have functions such as gloss, scratch resistance, and impact resistance.

In recent years, displays with curved surfaces have been proposed from the viewpoint such as design. A transparent resin film for a protective film for such uses is subjected to curved surface processing by thermoforming such as press molding, vacuum forming, and pressure forming. This transparent resin film undergoes optical distortion (phase difference) due to stress during heat bending. For a display with this, when a displayed image is viewed through a polarizing filter such as polarized sunglasses, a rainbow uneven pattern may be seen.

In addition, in recent years, in-vehicle head-up display (HUD) devices have been put into practical use from the viewpoint of improving safety and the like. The HUD device includes a display system such as a liquid crystal display, an optical system, and a housing that houses these. The housing has an opening for securing an optical path, and this opening is attached with a cover member made of transparent resin from the viewpoint of preventing foreign matter such as dust from entering the housing, improving workability, and the like.

For this cover member, a transparent resin film with a thickness of 1.0 mm or less can be used, because unlike a protective film for touch panels, there are few opportunities for people to actively touch the cover member, and rigidity is not required. In particular, polycarbonate single-layer films are often used from the viewpoint such as heat resistance and impact resistance. In a HUD device with this, due to optical distortion (phase difference) and variations in the orientation axis, a rainbow uneven pattern may be seen when a displayed image is viewed through a polarizing filter such as polarized sunglasses.

### Citation List

### Patent Literature

Patent Literature 1: Japanese Unexamined Patent Application Publication No. 2007-185956
Patent Literature 2: International Patent Publication No. WO 2011/145630
Patent Literature 3: Japanese Unexamined Patent Application Publication No. 2009-248416
Patent Literature 4: Japanese Unexamined Patent Application Publication No. 2016-22616
Patent Literature 5: International Patent Publication No. WO 2015/093037 (Japanese Patent No. 6266021)

### Summary of Invention

### Technical Problem

In the aforementioned applications, resin laminated films containing a polycarbonate layer that is excellent in heat resistance and impact resistance and a (meth)acrylic resin layer that is excellent in gloss, transparency, and scratch resistance have been contemplated. This resin laminated film is preferably produced by coextrusion molding. In this case, distortion stress may remain in the resulting resin laminated film due to the difference in the properties of the two types of resins. Strain stress that remains in the resin laminated film is called "residual stress," and warpage may possibly occur in a resin laminated film having such a residual stress due to thermal changes.

As a method for reducing residual stress in a resin laminated film and reducing warpage, Patent Literature 1 discloses a method of optimizing the rotational speed of cooling rolls used for extrusion molding (Claim 1). Patent Literature 2 discloses a method using, as a (meth)acrylic resin to be laminated with a polycarbonate, a resin obtained by copolymerizing a (meth)acrylic acid ester with an aromatic vinyl monomer and hydrogenating an aromatic double bond (Claim 2).

Further, in order to solve the aforementioned problems, studies to improve the heat resistance and the moisture resistance of (meth)acrylic resins have been made. For example, Patent Literature 3 discloses a method using, as a (meth)acrylic resin to be laminated with a polycarbonate, a (meth)acrylic resin having a methyl methacrylate (MMA) units and a unit selected from a methacrylic acid unit, an acrylic acid unit, a maleic acid anhydride unit, an N-substituted or unsubstituted maleimide unit, a glutaric acid anhydride unit, and a glutarimide unit and having a glass transition temperature (Tg) of 110°C or more (Claim 1).

Regarding literatures on low optical distortion laminated films for curved surface processing, Patent Literature 4 is mentioned. This literature discloses a multilayer film in which acrylic resin-containing layers (B-1 layer and B-2 layer) are laminated on both sides of a polycarbonate-containing layer (A layer), the total thickness is 50 to 300 µm, the thickness of the A layer is 5 to 35% of the total thickness, and an in-plane phase difference Re is 30 nm or less at an incident angle of 0° at a wavelength of 590 nm (claim 1).

This literature discloses, as a method for obtaining a low optical distortion laminated film, a method of compressing a molten resin discharged from an extruder between a metal roll and a metal elastic roll to form a film (claim 6).

However, as a result of studies performed by the present inventors, it is found that it is difficult to stably provide a low distortion laminated film with the above method alone.

In Patent Literature 5, the present inventors have disclosed a method for producing an extruded resin plate in which production conditions are optimized such as the relationship between the peripheral velocities of a plurality of cooling rolls and winding rolls, and the temperature of the entire resin at the time of peeling from the final cooling roll, in coextrusion molding of an extruded resin plate including a methacrylic resin layer laminated on at least one side of a polycarbonate layer (claim 1).

This method can reduce optical distortion, but the present inventors have discovered a method that can reduce optical distortion more effectively. This literature does not include any description regarding control of the orientation axis of optical distortion.

This disclosure has been made in view of the above circumstances, and the purpose thereof is to provide an extruded resin laminated film that includes a polycarbonate-containing layer and a (meth)acrylic resin-containing layer, has small optical distortion (phase difference) and small change in the orientation axis of in-plane optical distortion, and suppresses the occurrence of warpage due to thermal changes, and a method for producing the same.

### Solution to Problem

The present disclosure provides an extruded resin laminated film, a method for producing the same, and an extruded resin laminated film with a cured coating film, according to the following [1] to [11].
[1] A method for producing an extruded resin laminated film having a laminated structure in which a (meth)acrylic resin-containing layer is laminated on at least one side of a polycarbonate-containing layer, the method comprising the step of:
   coextruding a thermoplastic resin laminate having the laminated structure from a T-die in a molten state; cooling the molten thermoplastic resin laminate by using three or more cooling rolls adjacent to one another by repeating an operation multiple times from n = 1, the operation including sandwiching the molten thermoplastic resin laminate between the n-th (however, n ≥ 1) cooling roll and the n+1-th cooling roll, and winding around the n+1-th cooling roll; and winding up the extruded resin laminated film obtained after cooling by a winding roll, wherein
   the thermoplastic resin laminate is sandwiched between the first cooling roll and the second cooling roll without generating a bank;
   a metal elastic roll having an elastic outer cylinder made of a metal thin film on an outer peripheral portion is used as the first cooling roll, and a metal rigid roll is used as the second cooling roll;
   an overall temperature of the thermoplastic resin laminate (TT) when peeled off from the final cooling roll is lower than a glass transition temperature of the polycarbonate-containing layer by 40 to 5°C;
   both a peripheral velocity ratio (V3/V2) between a peripheral velocity (V3) of the third cooling roll and a peripheral velocity (V2) of the second cooling roll, and a peripheral velocity ratio (V4/V2) between a peripheral velocity (V4) of the winding roll and a peripheral velocity (V2) of the second cooling roll are set to 0.980 to 1.000; and
   for the extruded resin laminated film, a total thickness is 0.1 to 0.8 mm, a thickness of the (meth)acrylic resin-containing layer is 0.04 mm or more, a proportion of a total thickness of the (meth)acrylic resin-containing layer with respect to the total thickness is 50% or less, an in-plane retardation value of at least a portion of a width direction is 50 nm or less, an absolute value of a slow axis angle of the in-plane retardation is 10° or less when an angle of an axis parallel to an extrusion direction is 0°, and an amount of warpage after heating a square test specimen with a side length of 10 cm at 90°C for 10 minutes is 5 mm or less.
[2] The method for producing an extruded resin laminated film according to [1], wherein the extruded resin laminated film has a laminated structure in which the (meth)acrylic resin-containing layer containing a (meth)acrylic resin (A) with a triad syndiotacticity (rr) of 56% or more is laminated on at least one side of the polycarbonate-containing layer.
[3] The method for producing an extruded resin laminated film according to [2], wherein the (meth)acrylic resin (A) has a content of methyl methacrylate units of 90 mass% or more and a glass transition temperature of 122°C or more.
[4] The method for producing an extruded resin laminated film according to any one of [1] to [3], wherein the (meth)acrylic resin-containing layer contains rubber particles having a multilayered structure.
[5] The method for producing an extruded resin laminated film according to [1], wherein the (meth)acrylic resin-containing layer contains 5 to 90 mass% of (meth)acrylic resin and 95 to 10 mass% of a copolymer containing a structural unit derived from an aromatic vinyl compound and a structural unit derived from maleic anhydride, and has a glass transition temperature of 122°C or more.
[6] The method for producing an extruded resin laminated film according to [5], wherein the copolymer contains 50 to 85 mass% of the structural unit derived from an aromatic vinyl compound and 15 to 50 mass% of the structural unit derived from maleic anhydride.
[7] The method for producing an extruded resin laminated film according to [6], wherein the copolymer contains 50 to 84 mass% of the structural unit derived from an aromatic vinyl compound, 15 to 49 mass% of the structural unit derived from maleic anhydride, and 1 to 35 mass% of a structural unit derived from (meth)acrylic acid ester.
[8] An extruded resin laminated film comprising a (meth)acrylic resin-containing layer laminated on at least one side of a polycarbonate-containing layer, wherein
   a total thickness is 0.1 to 0.8 mm, a thickness of the (meth)acrylic resin-containing layer is 0.04 mm or more, a proportion of a total thickness of the (meth)acrylic resin-containing layer with respect to the total thickness is 50% or less;
   a glass transition temperature of the (meth)acrylic resin-containing layer is 122°C or more;
   an in-plane retardation value of at least a portion of a width direction is 50 nm or less;
   an absolute value of a slow axis angle of the in-plane retardation is 10° or less when an angle of an axis parallel to an extrusion direction is 0°; and
   an amount of warpage after heating a square test specimen with a side length of 10 cm at 90°C for 10 minutes is 5 mm or less.
[9] The extruded resin laminated film according to [8], wherein a difference between a glass transition temperature of the polycarbonate-containing layer and a glass transition temperature of the (meth)acrylic resin-containing layer is 28° C or less.
[10] The extruded resin laminated film according to [8] or [9] to be used for a head-up display device, wherein
   the (meth)acrylic resin-containing layer contains an infrared absorber; and
   the extruded resin laminated film has a total light transmittance of 80% or more and a transmittance of 60% or less at a wavelength of 1500 nm.
[11] An extruded resin laminated film with a scratch-resistant layer, comprising a scratch-resistant layer on at least one surface of the extruded resin laminated film according to any one of [8] to [10].

### Advantageous Effects of Invention

The present disclosure can provide an extruded resin laminated film that includes a polycarbonate-containing layer and a (meth)acrylic resin-containing layer, has small optical distortion (phase difference) and small change in the orientation axis of in-plane optical distortion, and suppresses the occurrence of warpage due to thermal changes, and a method for producing the same.

### Brief Description of the Drawings

[Fig. 1] Fig. 1 is a schematic cross-sectional view of the extruded resin laminated film of the first embodiment according to the present invention.
[Fig. 2] Fig. 2 is a schematic cross-sectional view of the extruded resin laminated film of the second embodiment according to the present invention.
[Fig. 3] Fig. 3 is a schematic view of the apparatus for production of the extruded resin laminated film of one embodiment according to the present invention.

### Description of Embodiments

### [Extruded resin laminated film]

The extruded resin laminated film of the present disclosure has a laminated structure in which a layer containing (meth)acrylic resin (PM) ((meth)acrylic resin-containing layer) is laminated on at least one side of a layer containing polycarbonate (PC) (polycarbonate-containing layer). In the present description, "(meth)acrylic" is a general term for acrylic and methacrylic.

In general, the term "film", "sheet", or "plate" is used for a thin film formed product depending on its thickness, but there is no clear distinction. In the present description, the term "film" is used for a thin film formed product of less than 1.0, for convenience of description.

The extruded resin laminated film of the present disclosure has a total thickness of 0.1 to 0.8 mm, and the thickness of the (meth)acrylic resin-containing layer is 0.04 mm or more. The proportion of the total thickness of the (meth)acrylic resin-containing layer with respect to the total thickness is 50% or less.

Polycarbonate (PC) is excellent in heat resistance and impact resistance, and (meth)acrylic resin is excellent in gloss, transparency, and scratch resistance. Therefore, the extruded resin laminated film of the present disclosure in which these resins are laminated is excellent in gloss, transparency, heat resistance, impact resistance, and scratch resistance. In addition, the extruded resin laminated film of the present disclosure is produced by an extrusion molding method, and thus is excellent in productivity.

### ((Meth)acrylic resin-containing layer)

The (meth)acrylic resin-containing layer contains one or more (meth)acrylic resins (PM). The (meth)acrylic resin (PM) is a homopolymer or a copolymer containing a structural unit derived from one or more types of (meth)acrylic acid hydrocarbon esters (hereinafter also simply referred to as (meth)acrylic acid esters). The hydrocarbon group in the (meth)acrylic acid ester may be an acyclic aliphatic hydrocarbon group such as a methyl group, ethyl group, or propyl group, may be an alicyclic hydrocarbon group, and may be an aromatic hydrocarbon group such as a phenyl group.

From the viewpoint of transparency, the content of (meth)acrylic acid ester monomer units in the (meth)acrylic resin (PM) is preferably 90 mass% or more, more preferably 95 mass% or more, particularly preferably 98 mass% or more, and may be 100 mass%.

Examples of the (meth)acrylic acid ester include methyl (meth)acrylate, ethyl (meth)acrylate, n-propyl (meth)acrylate, isopropyl (meth)acrylate, n-butyl (meth)acrylate, isobutyl (meth)acrylate, t-butyl (meth)acrylate, hexyl (meth)acrylate, 2-ethylhexyl (meth)acrylate, nonyl (meth)acrylate, decyl (meth)acrylate, dodecyl (meth)acrylate, stearyl (meth)acrylate, 2-hydroxyethyl (meth)acrylate, 2-hydroxypropyl (meth)acrylate, 4-hydroxybutyl (meth)acrylate, cyclohexyl (meth)acrylate, 2-methoxyethyl (meth)acrylate, 3-methoxybutyl (meth)acrylate, trifluoromethyl (meth)acrylate, trifluoroethyl (meth)acrylate, pentafluoroethyl (meth)acrylate, glycidyl (meth)acrylate, allyl (meth)acrylate, phenyl (meth)acrylate, toluyl (meth)acrylate, benzyl (meth)acrylate, isobornyl (meth)acrylate, and 3-dimethylaminoethyl (meth)acrylate.

Among them, methacrylic acid esters are preferable, and from the viewpoint of availability, MMA, ethyl methacrylate, n-propyl methacrylate, isopropyl methacrylate, n-butyl methacrylate, isobutyl methacrylate, and tert-butyl methacrylate are preferable, and MMA is particularly preferable.

The (meth)acrylic resin (PM) may contain a structural unit derived from one or more monomers other than the (meth)acrylic acid ester. Examples of the monomer other than (meth)acrylic acid ester include: (meth)acrylic acid; (meth)acrylic acid metal salt; vinyl monomers such as vinyl chloride and vinyl acetate;
(meth)acrylonitonyl; (meth)acrylamide; styrenic monomers such as styrene, α-methylstyrene, and vinyltoluene; and acid anhydrides such as maleic anhydride.

The content of the structural unit derived from the monomer other than (meth)acrylic acid ester in the (meth)acrylic resin (PM) is preferably 10 mass% or less, more preferably 5 mass% or less, and particularly preferably 2 mass% or less.

The (meth)acrylic resin (PM) is obtained by polymerizing one or more types of (meth)acrylic acid esters and, if necessary, other monomers. When using a plurality of types of monomers, typically, a plurality of types of monomers are mixed to prepare a monomer mixture and then polymerization is performed.

Examples of the polymerization method of the (meth)acrylic resins (PM) include a radical polymerization method and an anion polymerization method. In the radical polymerization method, polymerization techniques such as the suspension polymerization method, the bulk polymerization method, the solution polymerization method, and the emulsion polymerization method can be employed. Among them, the suspension polymerization method and the bulk polymerization method are preferable in view of the productivity and the resistance to thermal decomposition. In the anion polymerization method, polymerization techniques such as the bulk polymerization method and the solution polymerization method can be employed.

Various properties (Tg, Mw, Mw/Mn, MFR, flexural modulus, and the like) of the (meth)acrylic resin (PM) can be adjusted by adjusting polymerization conditions such as polymerization temperature, polymerization time, the type and amount of the chain transfer agent, and the type and amount of the polymerization initiator.

As a method for producing the (meth)acrylic resin (A) described below having a high rr ratio, an anionic polymerization method is preferable.

The weight-average molecular weight (Mw) of the (meth)acrylic resin (PM) is preferably 30,000 to 500,000. When the Mw is 30,000 or more, the (meth)acrylic resin-containing layer is excellent in scratch resistance and heat resistance, and when the Mw is 500,000 or less, the (meth)acrylic resin-containing layer is excellent in formability.

In the present description, the glass transition temperature of the (meth)acrylic resin (PM) or a composition containing the same is represented as Tg (M), the glass transition temperature of the (meth)acrylic resin (A) described below with a high rr ratio is represented as Tg (A), and the glass transition temperature of polycarbonate (PC) is represented as Tg (PC). In the present description, unless otherwise noted, the glass transition temperature is determined by the method described in [Examples].

Tg (M) is not particularly limited, and it is preferable that the difference from Tg (PC) is small. In this case, the extruded resin laminated film of the present disclosure is not easily affected by external environmental temperature, and even if exposed to high temperatures, the occurrence of warpage is suppressed. In this case, even if the extruded resin laminated film of the present disclosure is heat bent, optical distortion and the change in the orientation axis of in-plane optical distortion can be suppressed. In addition, the extruded resin laminated film of the present disclosure can be easily thermoformed, and the surface properties of the secondary formed product obtained after thermoforming can be improved. In addition, if forming a cured coating film on the extruded resin laminated film of the present disclosure, curing can be performed at a higher temperature, and thus the surface hardness of the cured coating film can be increased and the adhesion to the extruded resin laminated film can be improved.

The difference between the glass transition temperature of polycarbonate (PC) (Tg (PC)) and the glass transition temperature of (meth)acrylic resin (PM) (Tg (M)) is preferably 28°C or less, more preferably 25°C or less, and particularly preferably 20°C or less.

The lower limit of Tg (M) is preferably 120°C, more preferably 122°C, particularly preferably 125°C, and most preferably 127°C or more. The upper limit of Tg (M) is preferably 160°C, more preferably 155°C, and particularly preferably 150°C.

### <(Meth)acrylic resin (A)>

In one embodiment according to the present invention, the extruded resin laminated film can have a laminated structure in which the (meth)acrylic resin-containing layer containing a (meth)acrylic resin (A) with a triad syndiotacticity (rr) of 56% or more (hereinafter may simply be abbreviated as "syndiotacticity (rr)" or "rr ratio") is laminated on at least one side of the polycarbonate-containing layer.

The (meth)acrylic resin (A) with a rr percentage of 56% or more may be one (meth)acrylic resin with a rr percentage of 56% or more alone or a mixture of a plurality of (meth)acrylic resins that is composed of the plurality of (meth)acrylic resins with different rr percentages and has a rr percentage of 56% or more as a whole.

In the case where the (meth)acrylic resin (A) is a mixture of a plurality of (meth)acrylic resins, the mixture may have suitable properties as the (meth)acrylic resin (A) as a whole, also for various properties other than the rr percentage (such as Tg, Mw, Mw/Mn, MFR, and flexural modulus).

A plurality of types of (meth)acrylic resins having different properties may be combined to provide a (meth)acrylic resin (A) having desired properties.

The (meth)acrylic resin (A) with a rr percentage of 56% or more has a glass transition temperature (Tg) and a heat resistance that are higher than those of general (meth)acrylic resins. For improving a glass transition temperature Tg (A) of the (meth)acrylic resin (A), the rr percentage of the (meth)acrylic resin (A) is 56% or more, preferably 63% or more, more preferably 65% or more. The upper limit of the rr percentage of the (meth)acrylic resin (A) is not particularly limited and is preferably 99%, more preferably 95%, particularly preferably 90%, most preferably 85%, in view of the forming processability and the surface hardness.

The Tg (A) is preferably 122°C or more, more preferably 125°C or more, particularly preferably 127°C or more. The upper limit of the Tg (A) is generally about 130°C. The Tg (A) can be controlled by adjusting the molecular weight, the rr percentage, and the like.

While general (meth)acrylic resins have a comparatively low glass transition temperature (Tg) and a comparatively large difference in glass transition temperature (Tg) from the polycarbonate (PC), the (meth)acrylic resin (A) with a rr percentage of 56% or more has a comparatively high glass transition temperature (Tg) and a comparatively small difference in glass transition temperature (Tg) from the polycarbonate. Therefore, the extruded resin laminated film of the present embodiment with the (meth)acrylic resin (A) is less susceptible to the influence of external environmental temperature, and the occurrence of warpage is suppressed even when exposed to high temperatures. In this case, even if the extruded resin laminated film of the present embodiment is heat bent, optical distortion and the change in the orientation axis of in-plane optical distortion can be suppressed. In addition, the extruded resin laminated film of the present embodiment can be easily thermoformed, and the surface properties of the secondary formed product obtained after thermoforming can be improved. In addition, when forming a cured coating film on the extruded resin laminated film of the present embodiment, curing can be performed at a higher temperature, and thus the surface hardness of the cured coating film can be increased and the adhesion to the extruded resin laminated film can be improved.

The difference between the glass transition temperature of the polycarbonate (PC) (Tg (PC)) and the glass transition temperature of the (meth)acrylic resin (A) (Tg (A)) is preferably 28°C or less, more preferably 25°C or less, particularly preferably 20°C or less.

The rr percentage is a proportion at which two chains (diad) in the chains of three consecutive structural units (triad) are both racemos (referred to as rr). In the chains of structural units (diad) in polymer molecules, those having the same configuration are called meso, and those having the opposite configuration is called racemo, which are referred to as m and r, respectively. In the present description, unless otherwise noted, the "rr ratio" is determined by the method described in [Examples].

The preferred monomer unit composition of the (meth)acrylic resin (A) is the same as that of the (meth)acrylic resin (PM). The (meth)acrylic resin (A) is preferably one type of methacrylic resin alone or a mixture of a plurality of types of methacrylic resins. The (meth)acrylic resin (A) preferably has a content of methyl methacrylate (MMA) units of 90 mass% or more.

The weight-average molecular weight (Mw) of the (meth)acrylic resin (A) is not particularly limited and is preferably 30,000 to 200,000, more preferably 50,000 to 150,000, particularly preferably 60,000 to 120,000. In the case where the Mw of the (meth)acrylic resin (A) with a rr percentage of 56% or more is 30,000 to 200,000, the (meth)acrylic resin-containing layer is easily formed, and the extruded resin laminated film to be obtained has high strength and is less likely to crack.

The molecular weight distribution of the (meth)acrylic resin (A) (a ratio of the weight-average molecular weight (Mw) to the number-average molecular weight (Mn), Mw/Mn) is not particularly limited and is preferably 1.01 to 5.0, more preferably 1.05 to 3.5. In the present description, the Mw and the Mn are standard polystyrene equivalent values determined using gel permeation chromatography (GPC), unless otherwise noted.

The melt flow rate (MFR) of the (meth)acrylic resin (A) is preferably 0.1 to 20 g/10 minutes, more preferably 0.5 to 15 g/10 minutes, particularly preferably 1.0 to 10 g/10 minutes. In the present description, the MFR of the (meth)acrylic resin (A) is a value determined according to JIS K7210 using a melt indexer at a temperature of 230°C under a load of 3.8 kg, unless otherwise noted.

The flexural modulus of the (meth)acrylic resin (A) is not particularly limited and is preferably 3200 MPa or less, more preferably 3150 MPa or less, particularly preferably 3100 MPa or less, most preferably 3000 MPa or less. The flexural modulus can be determined according to JIS K7171.

### <Rubber particles having a multilayered structure (RP)>

In another embodiment of the present invention, the (meth)acrylic resin (PM) and the (meth)acrylic resin-containing layer can include rubber particles having a multilayered structure (RP).

The (meth)acrylic resin (PM) is excellent in gloss, transparency, surface hardness, and the like, but depending on the application, may require higher impact resistance. The impact resistance of the (meth)acrylic resin-containing layer can be improved by adding rubber particles having a multilayered structure (RP) to the (meth)acrylic resin (PM). For example, the impact resistance of an extruded resin laminated film for resin glazing can be improved. For example, cracks when thermoforming or handling an extruded resin laminated film for decorative film serving as an alternative material for coating can be reduced.

In general, there is a tendency that, as the concentration of rubber particles having a multilayered structure (RP) in the (meth)acrylic resin-containing layer increases, the toughness relatively increases, but the surface hardness relatively decreases. In view of the balance between the surface hardness and the impact resistance, the content of the (meth)acrylic resin (PM) is preferably 94 to 75 mass%, more preferably 92 to 80 mass%, particularly preferably 92 to 88 mass%, and the content of the rubber particles having a multilayered structure (RP) is preferably 6 to 25 mass%, more preferably 8 to 20 mass%, particularly preferably 8 to 12 mass%, in the (meth)acrylic resin-containing layer.

The rubber particles having a multilayered structure (RP) are preferably acrylic rubber particles having a multilayered structure comprising one or more graft copolymer layers containing one or more acrylic acid alkyl ester copolymers. As such acrylic rubber particles having a multilayered structure, those disclosed in Japanese Unexamined Patent Application Publication No. 2004-352837 or the like can be used. The acrylic rubber particles having a multilayered structure can preferably comprise a crosslinked polymer layer containing acrylic acid alkyl ester units having 6 to 12 carbon atoms. The number of layers of the rubber particles having a multilayered structure (RP) is not particularly limited and may be two, or three or more layers. The upper limit of the number of layers is not particularly limited, and is typically about 4 layers. Preferably, the rubber particles having a multilayered structure (RP) are core-shell multilayered particles of three or more layers including the innermost layer (RP-a), one or more intermediate layers (RP-b), and the outermost layer (RP-c).

The constituent polymer of the innermost layer (RP-a) contains MMA units and graftable or crosslinkable monomer units and can further contain one or more other monomer units, as required. The content of the MMA units in the constituent polymer of the innermost layer (RP-a) is preferably 80 to 99.99 mass%, more preferably 85 to 99 mass%, particularly preferably 90 to 98 mass%. The proportion of the innermost layer (RP-a) in the three or more layers of the multilayered particles (RP) is preferably 0 to 15 mass%, more preferably 7 to 13 mass%. The proportion of the innermost layer (RP-a) falling within such a range can enhance the heat resistance of the (meth)acrylic resin-containing layer.

The constituent polymer of the intermediate layers (RP-b) contains acrylic acid alkyl ester units having 6 to 12 carbon atoms and graftable or crosslinkable monomer units and can further contain one or more other monomer units, as required. The content of the acrylic acid alkyl ester units in the constituent polymer of the intermediate layers (RP-b) is preferably 70 to 99.8 mass%, more preferably 75 to 90 mass%, particularly preferably 78 to 86 mass%. The proportion of the intermediate layers (RP-b) in the three or more layers of the rubber particles having a multilayered structure (RP) is preferably 40 to 60 mass%, more preferably 45 to 55 mass%. The proportion of the intermediate layers (RP-b) falling within such a range can enhance the surface hardness of the (meth)acrylic resin-containing layer and make it difficult for the (meth)acrylic resin-containing layer to crack.

The constituent polymer of the outermost layer (RP-c) contains MMA units and can further contain one or more other monomer units, as required. The content of the MMA units in the constituent polymer of the outermost layer (RP-c) is preferably 80 to 100 mass%, more preferably 85 to 100 mass%, particularly preferably 90 to 100 mass%. The proportion of the outermost layer (RP-c) in the three or more layers of the multilayered particles (RP) is preferably 35 to 50 mass%, more preferably 37 to 45 mass%. The proportion of the outermost layer (RP-c) falling within such a range can enhance the surface hardness of the (meth)acrylic resin-containing layer and make it difficult for the (meth)acrylic resin-containing layer to crack.

The particle size of the rubber particles having a multilayered structure (RP) is not particularly limited and is preferably 0.05 to 0.3 µm, more preferably 0.08 to 0.25 µm, particularly preferably 0.08 to 0.13 µm. The particle size can be determined by known methods such as observation with an electron microscope and dynamic light scattering measurement. The measurement by observation with an electron microscope can be performed, for example, by selectively staining a specific layer of the rubber particles having a multilayered structure (RP) by electron staining, actually measuring the particle size of a plurality of particles using a transmission electron microscope (TEM) or a scanning electron microscope (SEM), and determining the average thereof. The dynamic light scattering method is a measurement method using a principle that the Brownian motion of the particle increases as the particle size increases.

The rubber particles having a multilayered structure (RP) can be used in latex or powder form containing the rubber particles having a multilayered structure (RP) and dispersing particles (D), in order to suppress the reduction in handleability due to agglutination of the rubber particles having a multilayered structure (RP) with each other and the reduction in impact resistance due to poor dispersion during melt kneading. As the dispersing particles (D), particles composed of a (co)polymer of one or more monomers mainly composed of MMA and having a particle size relatively smaller than that of the rubber particles having a multilayered structure (RP) can be used, for example.

The particle size of the dispersing particles (D) is preferably as small as possible for improving the dispersibility and is preferably 40 to 120 nm, more preferably 50 to 100 nm, in view of the manufacturing reproducibility by the emulsion polymerization method. The amount of the dispersing particles (D) to be added is preferably 10 to 50 mass%, more preferably 20 to 40 mass%, with respect to the total amount of the rubber particles having a multilayered structure (RP) and the dispersing particles (D), in view of the effect of improving the dispersibility.

### <(Meth)acrylic resin composition (MR)>

In another embodiment according to the present invention, the (meth)acrylic resin-containing layer can contain a (meth)acrylic resin composition (MR) containing a (meth)acrylic resin (PM) and a SMA resin (hereinafter also simply referred to as resin composition (MR)).

Examples of the "SMA resin" include: a binary copolymer including a structural unit derived from one or more aromatic vinyl compounds (II) and a structural unit derived from one or more acid anhydrides (III) containing maleic anhydride (MAh); and a terpolymer including a structural unit derived from one or more aromatic vinyl compounds (II), a structural unit derived from one or more acid anhydrides (III) containing maleic anhydride (MAh), and a structural unit derived from (meth)acrylic acid ester.

From the viewpoint of setting the glass transition temperature (Tg (M)) to 122°C or more, the content of the (meth)acrylic resin (PM) in the resin composition (MR) is preferably 5 to 90 mass%, more preferably 5 to 55 mass%, and particularly preferably 10 to 50 mass%. The content of the SMA resin in the resin composition (MR) is preferably 95 to 10 mass%, more preferably 95 to 45 mass%, and particularly preferably 90 to 50 mass%.

Examples of the aromatic vinyl compound (II) include: styrene (St); nuclear alkyl-substituted styrenes such as 2-methylstyrene, 3-methylstyrene, 4-methylstyrene, 4-ethylstyrene, and 4-tert-butylstyrene; and α-alkyl substituted styrenes such as α-methylstyrene and 4-methyl-α-methylstyrene. Among them, styrene (St) is preferable from the viewpoint of availability. From the viewpoint of transparency and moisture resistance of the resin composition (MR), the content of aromatic vinyl compound (II) monomer units in the SMA resin is preferably 50 to 85 mass%, more preferably 55 to 82 mass%, and particularly preferably 60 to 80 mass%.

As the acid anhydride (III), at least maleic anhydride (MAh) is used from the viewpoint of availability, and other acid anhydrides such as citraconic anhydride and dimethyl maleic anhydride can be used as necessary. From the viewpoint of transparency and heat resistance of the resin composition (MR), the content of acid anhydride (III) monomer units in the SMA resin is preferably 15 to 50 mass%, more preferably 18 to 45 mass%, and particularly preferably 20 to 40 mass%.

As the (meth)acrylic acid ester, MMA is preferable from the viewpoint of heat resistance and transparency of the SMA resin. From the viewpoint of bending workability and transparency of the extruded resin laminated film, the content of (meth)acrylic acid ester monomer units in the SMA resin is preferably 1 to 35 mass%, more preferably 3 to 30 mass%, and particularly preferably 5 to 26 mass%. In this case, the content of aromatic vinyl compound (II) monomer units is preferably 50 to 84 mass%, and the content of acid anhydride (III) monomer units is preferably 15 to 49 mass%.

The SMA resin may have a structural unit derived from the monomer other than the aromatic vinyl compound (II), acid anhydride (III), and (meth)acrylic acid ester. The content of other monomer units in the SMA resin is preferably 10 mass% or less, more preferably 5 mass% or less, and particularly preferably 2 mass% or less.

Other monomers can be selected from the group of monomers excluding the aromatic vinyl compound (II) and the acid anhydride (III) from the other monomers listed in the explanation of the (meth)acrylic resin (PM).

The SMA resin is obtained by polymerizing an aromatic vinyl compound (II), an acid anhydride (III), (meth)acrylic acid ester as necessary, and other monomers as necessary. In this polymerization, a monomer mixture is typically prepared by mixing a plurality of types of monomers, and then polymerization is performed. The polymerization method is not particularly limited, and from the viewpoint of productivity, radical polymerization methods such as bulk polymerization method and solution polymerization method are preferable.

A commercially available SMA resin may be used. Examples thereof include "Regisphi (registered trademark)" manufactured by Denki Kagaku Kogyo Co., Ltd. and "XIRAN (registered trademark)" manufactured by Polyscope Polymers B.V.

The Mw of the SMA resin is preferably 40,000 to 300,000. When Mw is 40,000 or more, the (meth)acrylic resin-containing layer becomes excellent in scratch resistance and impact resistance, and when Mw is 300,000 or less, the (meth)acrylic resin-containing layer becomes excellent in formability.

The resin composition (MR) is obtained, for example, by mixing the (meth)acrylic resin (PM) and the SMA resin. Examples of the mixing method include a melt mixing method and a solution mixing method. In the melt mixing method, melt kneading machines such as single or multi-screw kneaders, open rolls, Banbury mixers, and kneaders are used, and if necessary, melt-kneading can be performed in an atmosphere of an inert gas such as nitrogen gas, argon gas, and helium gas. In the solution mixing method, the (meth)acrylic resin (PM) and SMA resin can be dissolved and mixed in an organic solvent such as toluene, tetrahydrofuran, and methyl ethyl ketone.

### <Infrared absorber>

The (meth)acrylic resin-containing layer can contain one or more infrared absorbers. In this case, the extruded resin laminated film of the present disclosure can block at least a portion of infrared rays.

For example, the extruded resin laminated film of the present disclosure is used as a cover member for a housing of a head-up display (HUD) device, allowing to prevent the display system and optical system inside the housing from receiving damage due to the increased temperature inside the housing by infrared rays contained in external light.

When the (meth)acrylic resin-containing layer contains an infrared absorber, from the viewpoint of infrared shielding effect, the transmittance of the extruded resin laminated film of the present disclosure at a wavelength of 1500 nm is preferably 60% or less, and more preferably 50% or less.

When the (meth)acrylic resin-containing layer contains an infrared absorber, the total light transmittance (Tt) of the extruded resin laminated film of the present disclosure is preferably 80% or more.

In applications such as a cover member for the housing of the head-up display (HUD) device, it is preferable that the total light transmittance (Tt) is 80% or more and the transmittance at a wavelength of 1500 nm is 60% or less.

As the infrared absorber, known ones can be used.

Preferable is at least one type of fine particles selected from the group consisting of:
tungsten oxide fine particles represented by the general formula W_{y}O_{z} (where W is tungsten, O is oxygen, 2.2 ≤ z/y ≤ 2.999);
composite tungsten oxide fine particles represented by the general formula MₓW_{y}O_{z} (where M is at least one element selected from the group consisting of H, He, alkali metals, alkaline earth metals, and rare earth elements, W is tungsten, O is oxygen, 0.001 ≤ x/y ≤ 1, 2.2 ≤ z/y ≤ 3);
composite oxide fine particles represented by the general formula LaXOs (where X is at least one metal element selected from the group consisting of Ni, Co, Fe, and Mn); and
boride fine particles represented by the general formula XBₘ (where X is at least one metal element selected from the group consisting of Y, Sr, Ca, and lanthanoids, 4.0 ≤ m ≤ 6.2), indium tin oxide (ITO) fine particles, and antimony tin oxide (ATO) fine particles.

Depending on the thickness of the (meth)acrylic resin-containing layer, the concentration of the infrared absorber contained in the (meth)acrylic resin-containing layer can be designed so that the transmittance of the extruded resin laminated film at a wavelength of 1500 nm is 60% or less. Although depending on the thickness of the (meth)acrylic resin-containing layer, the concentration is preferably 0.01 to 2.00 mass%, more preferably 0.01 to 1.00 mass%, particularly preferably 0.05 to 0.50 mass%, and most preferably 0.10 to 0.30 mass%.

A layer to which an infrared absorber has been added may absorb infrared rays during a weather resistance test, resulting in a temperature rise, which may accelerate the deterioration reaction of the resin and the like. Adding an infrared absorber to the (meth)acrylic resin-containing layer, which is excellent in weather resistance, instead of the polycarbonate-containing layer, which is poor in weather resistance, can suppress discoloration (coloring) during the weather resistance test.

The timing of adding the infrared absorber may be during or after polymerization of resins such as (meth)acrylic resin (PM), (meth)acrylic resin (A), SMA resin, and rubber particles having a multilayered structure (RP), or may be during or after mixing a plurality of types of resins.

The (meth)acrylic resin-containing layer can contain one or more polymers other than the (meth)acrylic resin, as required.

Examples of other polymers include: but are not particularly limited to, other thermoplastic resins such as polyolefins including polyethylene and polypropylene, polyamide, polyphenylene sulfide, polyetheretherketone, polyester, polysulfone, polyphenylene oxide, polyimide, polyetherimide, and polyacetal; and thermosetting resins such as phenolic resins, melamine resins, silicone resins, and epoxy resins. The content of the other polymers in the (meth)acrylic resin-containing layer is preferably 10 mass% or less, more preferably 5 mass% or less, particularly preferably 2 mass% or less.

The (meth)acrylic resin-containing layer can contain various additives other than the infrared absorber, if necessary. Examples of the additive include antioxidants, heat deterioration inhibitors, ultraviolet absorbers, light stabilizers, lubricants, mold release agents, polymer processing aids, antistatic agents, flame retardants, dyes and pigments, light diffusing agents, matting agents, block copolymers, and phosphors.

The content of the additive can be appropriately set within a range that does not impair the effects of the present invention. Relative to 100 parts by mass of the resin constituting the (meth)acrylic resin-containing layer, for example, preferably, the content of the antioxidant is 0.01 to 1 part by mass, the content of the ultraviolet absorber is 0.01 to 3 parts by mass, the content of the light stabilizer is 0.01 to 3 parts by mass, the content of lubricant is 0.01 to 3 parts by mass, and the content of the dye and pigment is 0.01 to 3 parts by mass.

From the viewpoint of stability of hot melt molding, the melt flow rate (MFR) of the constituent resin of the (meth)acrylic resin-containing layer is preferably 1 to 10 g/10 minutes, more preferably 1.5 to 7 g/10 minutes, and particularly preferably 2 to 4 g/10 minutes. In the present description, unless otherwise noted, the MFR of the constituent resin of the (meth)acrylic resin-containing layer is a value measured using a melt indexer at a temperature of 230°C and a load of 3.8 kg.

### (Polycarbonate-containing layer)

The polycarbonate-containing layer comprises one or more polycarbonates (PC). Such a polycarbonate (PC) is preferably obtained by copolymerization of one or more dihydric phenols and one or more carbonate precursors. Examples of the production method include interfacial polymerization in which an aqueous solution of a dihydric phenol and an organic solvent solution of a carbonate precursor are reacted at the interface, and transesterification in which a dihydric phenol and a carbonate precursor are reacted under high-temperature, reduced pressure, and solvent-free conditions.

Examples of the dihydric phenol include 2,2-bis(4-hydroxyphenyl)propane (commonly known as bisphenol A), 1,1-bis(4-hydroxyphenyl)ethane, 1,1-bis(4-hydroxyphenyl)cyclohexane, 2,2-bis(3-methyl-4-hydroxyphenyl)propane, 2,2-bis(3,5-dimethyl-4-hydroxyphenyl)propane, bis(4-hydroxyphenyl)sulfide, and bis(4-hydroxyphenyl)sulfone. Among them, bisphenol A is preferable. Examples of the carbonate precursor include carbonyl halides such as phosgene; carbonate esters such as diphenyl carbonate; and haloformates such as dihaloformate of a dihydric phenol.

The Mw of the polycarbonate (PC) is preferably 10,000 to 100,000, more preferably 20,000 to 70,000. The Mw being 10,000 or more allows the polycarbonate-containing layer to be excellent in impact resistance and heat resistance, whereas the Mw being 100,000 or less allows the polycarbonate-containing layer to be excellent in formability.

A commercially available product may be used for the polycarbonate (PC). Examples thereof include "CALIBRE (registered trademark)" and "SD POLYCA (registered trademark)", which are available from Sumika Styron Polycarbonate Limited, "IUPILON/Novarex (registered trademark)" available from Mitsubishi Engineering-Plastics Corporation, "TARFLON (registered trademark)" available from Idemitsu Kosan Co., Ltd., and "Panlite (registered trademark)" available from Teijin Chemicals Ltd.

The polycarbonate-containing layer can contain one or more other polymers and/or various additives, as required. The same other polymers and various additives as described above for the (meth)acrylic resin-containing layer can be used. The content of the other polymers in the polycarbonate-containing layer is preferably 15 mass% or less, more preferably 10 mass% or less, particularly preferably 5 mass% or less. The content of the additives can be appropriately set, as long as the effects of the present invention are not impaired. Preferably, the content of antioxidants is 0.01 to 1 part by mass, the content of ultraviolet absorbers is 0.01 to 3 parts by mass, the content of light stabilizers is 0.01 to 3 parts by mass, the content of lubricants is 0.01 to 3 parts by mass, and the content of dyes or pigments is 0.01 to 3 parts by mass, with respect to 100 parts by mass of the polycarbonate (PC).

In the case of adding such other polymers and/or additives to the polycarbonate (PC), the timing of addition may be at the time of polymerization of the polycarbonate (PC) or after the polymerization.

The glass transition temperature Tg (PC) of the polycarbonate-containing layer is preferably 120 to 160°C, more preferably 135 to 155°C, particularly preferably 140 to 150°C.

In view of the stability of hot melt molding, the MFR of the constituent resin of the polycarbonate-containing layer is preferably 1 to 30 g/10 minutes, more preferably 3 to 20 g/10 minutes, particularly preferably 5 to 10 g/10 minutes. In the present description, the MFR of the constituent resin of the polycarbonate-containing layer is a value determined using a melt indexer at a temperature of 300°C under a load of 1.2 kg, unless otherwise noted.

### (Relationship of thickness)

The extruded resin laminated film of the present disclosure has a total thickness of 0.1 to 0.8 mm. If the total thickness is too thin, there is a risk of defective cracks during thermoforming processing, and if it is too thick, it may be difficult to form a fine shape during thermoforming processing, and thus the forming processability may deteriorate.

In the extruded resin laminated film of the present disclosure, from the viewpoint of scratch resistance and impact resistance, the thickness of the (meth)acrylic resin-containing layer is 0.04 mm or more.

In the extruded resin laminated film of the present disclosure, from the viewpoint of suppressing occurrence of warpage due to heat change, the proportion of the total thickness of the (meth)acrylic resin-containing layer with respect to the total thickness is 50 % or less, preferably 49 % or less, more preferably 45 % or less, and particularly preferably 40 % or less.

In the extruded resin laminated film of the present disclosure, the thickness of the (meth)acrylic resin-containing layer is 0.4 mm or less.

### (Laminated structure)

The extruded resin laminated film of the present disclosure may have other resin layers, as long as the (meth)acrylic resin-containing layer is laminated on at least one side of the polycarbonate-containing layer. Examples of the laminated structure of the extruded resin laminated film of the present disclosure include a two-layer structure of polycarbonate-containing layer/(meth)acrylic resin-containing layer; a three-layer structure of (meth)acrylic resin-containing layer/polycarbonate-containing layer/(meth)acrylic resin-containing layer; a three-layer structure of (meth)acrylic resin-containing layer/polycarbonate-containing layer/another resin layer; and a three-layer structure of another resin layer/(meth)acrylic resin-containing layer/polycarbonate-containing layer.

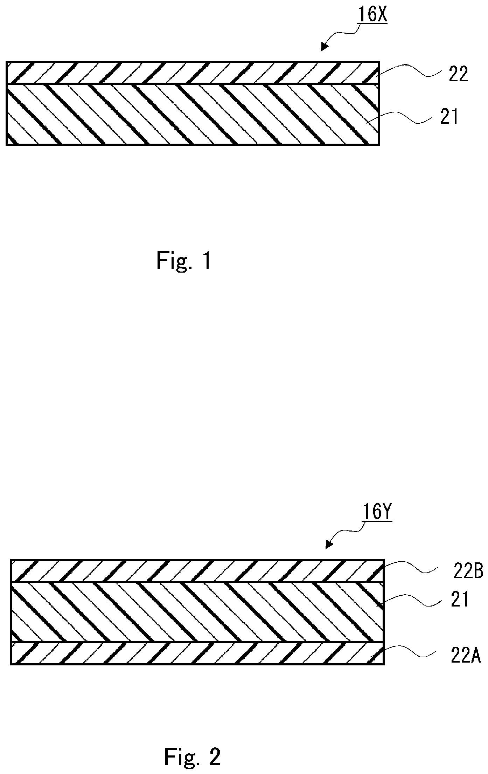

Fig. 1 and Fig. 2 are schematic cross-sectional views of the extruded resin laminated films of the first and second embodiments according to the present invention. In the figures, reference numerals 16X and 16Y each denote an extruded resin laminated film, reference numeral 21 denotes a polycarbonate-containing layer, and reference numerals 22, 22A, and 22B each denote a (meth)acrylic resin-containing layer. The extruded resin laminated film 16X of the first embodiment has a two-layer structure of a polycarbonate-containing layer 21 and a (meth)acrylic resin-containing layer 22. The extruded resin laminated film 16Y of the second embodiment has a three-layer structure of a first (meth)acrylic resin-containing layer 22A, the polycarbonate-containing layer 21, and a second (meth)acrylic resin-containing layer 22B. The design of the configuration of the extruded resin laminated film can be appropriately changed.

### (Cured coating film)

A cured coating film can be provided on at least one surface of the extruded resin laminated film of the present disclosure. The cured coating film can be functioned as a scratch resistance layer or a low-reflective layer for visibility improvement effect. The cured coating film can be formed in a known method.

For applications such as a protective film for liquid crystal displays and cover members for HUD, from the viewpoint of scratch prevention, it is preferable to provide a scratch resistance layer on the outermost surface of the extruded resin laminated film.

The extruded resin laminated film with a scratch resistance layer of the present disclosure is a film including a scratch resistance layer on at least one surface of the extruded resin laminated film of the present disclosure as described above.

As a material for the cured coating film, inorganic, organic, organic inorganic, silicone materials, and the like are exemplified, and from the viewpoint of productivity, organic and organic inorganic materials are preferable.

The inorganic cured coating film can be formed, for example, by forming a film of inorganic materials such as metal oxides including SiO₂, Al₂O₃, TiO₂, and ZrO₂ through gas phase film formation such as vacuum vapor deposition or sputtering.

The organic cured coating film can be formed, for example, by applying and heat curing a coating material containing a resin such as melamine-based resin, alkyd-based resin, urethane-based resin, and acrylic-based resin, or applying and UV curing a coating material containing multi-functional acrylic-based resin.

The organic inorganic cured coating film can be formed, for example, by applying an ultraviolet curable hard coat coating material containing inorganic ultra-fine particles such as silica ultra-fine particles introduced with photopolymerization reactive functional groups on the surface; and a curable organic component, and irradiating with ultraviolet rays to polymerize the curable organic component and the optical polymerization reactive functional group of inorganic ultra-fine particles. This method can provide a network crosslinked coating film in which the inorganic ultra-fine particles are dispersed in an organic matrix while chemically bonded to the organic matrix.

A silicone-based cured coating film can be formed, for example, by polycondensing partial hydrolysates of carbon functional alkoxysilanes, alkyltrialkoxysilanes, and tetraalkoxysilanes, or materials containing these with colloidal silica.

In the above method, examples of the application method for the material include dip coating, various roll coatings such as gravure roll coating, flow coating, rod coating, blade coating, spray coating, die coating, and bar coating.

The thickness of the scratch-resistant (hard coating) cured coating film (scratch-resistant layer) is preferably 2 to 30 µm, more preferably 5 to 20 µm. Excessively small thickness may result in insufficient surface hardness, whereas excessively large thickness may result in cracks caused by bending during the production process.

The thickness of the low-reflective cured coating film (low-reflective layer) is preferably 80 to 200 nm, more preferably 100 to 150 nm. This is because either excessively small or large total thickness may result in insufficient low-reflection performance.

### [Method for producing extruded resin laminated film]

Hereinafter, the method for producing the extruded resin laminated film of the present disclosure with the aforementioned configuration will be described. The extruded resin laminated film of the present disclosure can be produced by a production method including coextrusion.

### (Step (X))

The constituent resins of the polycarbonate-containing layer and the (meth)acrylic resin-containing layer are each heated and melted to be co-extruded in a molten state from a T-die with a wide outlet in the form of a thermoplastic resin laminate in which the (meth)acrylic resin-containing layer is laminated on at least one side of the polycarbonate-containing layer.

The molten resin for polycarbonate-containing layer and the molten resin for (meth)acrylic resin-containing layer are preferably melted and filtered with a filter before lamination. Multilayer formation using the molten resins that have been melted and filtered allows an extruded resin laminated film with less defects due to foreign matter and gel to be obtained. A filter medium is appropriately selected for the filter depending on the operating temperature, the viscosity, the filtration accuracy, and the like. Examples thereof include: nonwoven fabrics made of polypropylene, polyester, rayon, cotton, glass fiber, or the like; sheet materials made of cellulose impregnated with phenolic resin; sintered metal fiber nonwoven sheets; metal powder sintered sheet materials; a wire mesh; and combinations thereof. Among them, a filter in which a plurality of metal fiber non-woven fabric sintered sheet-like materials are laminated is preferable in view of the heat resistance and the durability. The filtration accuracy of the filter is not particularly limited and is preferably 30 µm or less, more preferably 15 µm or less, particularly preferably 5 µm or less.

Examples of the lamination method include the feed block method in which lamination is carried out before flowing into the T-die and the multi-manifold method in which lamination is carried out inside the T-die. For enhancing the smoothness at the interface between the layers of the extruded resin laminated film, the multi-manifold method is preferable.

The molten thermoplastic resin laminate co-extruded from the T-die is cooled using a plurality of cooling rolls. In the production method of the present disclosure, using three or more cooling rolls adjacent to one another, the molten thermoplastic resin laminate is cooled by repeating an operation multiple times from n = 1, the operation including sandwiching the molten thermoplastic resin laminate between the n-th (however, n ≥ 1) cooling roll and the n+1-th cooling roll, and winding around the n+1-th cooling roll. For example, in the case of using three cooling rolls, the number of repetitions is two.

Examples of such a cooling roll include a metal rigid roll and a metal elastic roll.

The metal rigid roll is a roll that does not have elasticity and is made of metal such as stainless steel, and includes drilled rolls, spiral rolls, and the like. The surface of the metal rigid roll may be a mirror surface, or may have a pattern or unevenness.

The metal elastic roll is a roll that includes an elastic outer cylinder made of a metal thin film on the outer peripheral portion. The metal elastic roll consists of, for example, a metal shaft roll made of stainless steel or the like, a metal thin film made of stainless steel or the like that covers the outer peripheral surface of this core roll, and a fluid sealed between these core roll and metal thin film (elastic outer cylinder), and it can show elasticity by the presence of the fluid. Examples of the fluid include water and oil.

The thickness of the metal thin film of the metal elastic roll is not particularly limited, and is preferably about 2 to 8 mm. The metal thin film preferably has bending properties, flexibility, and the like, and preferably has a seamless structure having no welded joint. The metal elastic roll comprising such a metal thin film is easy to use because it is excellent in durability, can be handled like a usual mirror surface roll if the metal thin film is mirror finished, and if a pattern, an unevenness, or the like is imparted on the metal thin film, it can become a roll capable of transferring the shape.

In the production method of the present disclosure, a metal elastic roll having an elastic outer cylinder made of a metal thin film on the outer peripheral portion is used as the first cooling roll, and a metal rigid roll is used as the second cooling roll. The third cooling roll is not particularly limited, and a metal elastic roll or a metal rigid roll can be used.

The extruded resin laminated film obtained after cooling is wound up by winding rolls. The coextrusion, cooling, and winding steps described above are continuously carried out. As used herein, although the laminate in the heated and molten state is principally represented as the "thermoplastic resin laminate" and the laminate in a solid form is represented as the "extruded resin laminated film", there is no definite boundary between the two.

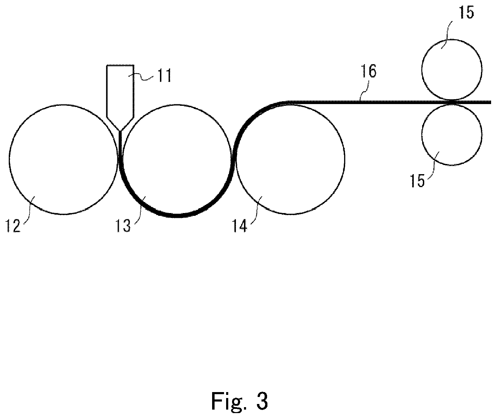

Fig. 3 shows a schematic view of an apparatus for production comprising a T-die 11, first to third cooling rolls 12 to 14, and a pair of winding rolls 15, as one embodiment. The thermoplastic resin laminate co-extruded from the T-die 11 is cooled using the first to third cooling rolls 12 to 14 and wound up by the pair of winding rolls 15. In the example illustrated, the third cooling roll 14 is "the cooling roll around which the thermoplastic resin laminate is finally wound up (also referred to as the final cooling roll)".

The fourth and subsequent cooling rolls may be provided adjacent to the subsequent stage of the third cooling roll 14. In this case, the cooling roll around which the thermoplastic resin laminate is finally wound up serves as the "final cooling roll". A carrying roll can be provided between the plurality of cooling rolls adjacent to one another and the winding rolls, as required, but the carrying roll is not included in the "cooling rolls".

The design of the configuration of the production apparatus can be modified as appropriate without departing from the spirit of the present invention.

### <Retardation>

"Retardation" is the phase difference between light in the direction of the molecular backbone and light in the direction perpendicular thereto. Generally, polymers can be molded into any desired shape by heating and melting, but it is known that stress generated during heating and cooling processes causes molecules to become oriented, resulting in retardation. Therefore, in order to control retardation, it is necessary to control the orientation of molecules. Molecular orientation is caused, for example, by stress during molding near the glass transition temperature (Tg) of the polymer. In the present description, "retardation" refers to in-plane retardation unless otherwise noted. In addition, retardation may be abbreviated as Re.

### <Retardation axis>

The axis of in-plane retardation depends on the orientation direction of the molecules. When the orientational birefringence and photoelastic coefficient of the resin exhibit positive values, the direction perpendicular to the orientation direction of the molecules is the fast axis, and the direction parallel thereto is the slow axis. On the contrary, when the orientational birefringence and photoelastic coefficient of the resin exhibit negative values, the slow axis is the direction perpendicular to the orientation direction of the molecules, and the fast axis is the direction parallel thereto. That is, the fast axis and the slow axis are orthogonal to each other. In addition, the orientation direction of the molecules depends on the pulling direction, and generally, the direction parallel to the extrusion direction is the fast axis or the slow axis.

In addition, generally, the orientational birefringence and photoelastic coefficient of polycarbonate exhibit positive values, and the orientational birefringence and photoelastic coefficient of the (meth)acrylic resin exhibit negative values.

In the case of the extruded resin laminated film of the present disclosure, the direction parallel to the extrusion direction is the slow axis because of large influence of the orientation birefringence and photoelastic coefficient of polycarbonate. Therefore, in the present description, unless otherwise noted, the retardation axis (Re axis) indicates the slow axis of in-plane retardation. In addition, in the present description, the angle of the retardation axis (Re axis) indicates the absolute value of the angle of the slow axis of in-plane retardation when the angle of the axis parallel to the extrusion direction is 0°.

### <Cooling roll>

In the production method of the present disclosure, a metal elastic roll is used as the first cooling roll, a metal rigid roll is used as the second cooling roll, and the thermoplastic resin laminate is sandwiched between these cooling rolls without generating a bank. The bank is a resin pool generated in the gap between the first cooling roll and the second cooling roll.

Conventionally, in extrusion resin film molding, it is common to use metal rigid rolls as the first cooling roll and the second cooling roll. In this case, in order to control the thickness of the film and obtain a good surface condition, molding is performed while generating a bank between the first cooling roll and the second cooling roll. In this conventional method, the bank contacts both the first cooling roll and the second cooling roll. The surface of the bank has a temperature close to the glass transition temperature and a certain stretching stress is generated, which affects the Re value and the Re axis. Inside the bank, a flow occurs in a direction perpendicular to the film surface, and the cross section of the flow maintains a constant state while a vortex is generated. The direction of this vortex is considered to have a large influence on changing the Re axis because the vortex maintains the fluidity.

As a result of intensive research based on this idea, in order to reduce the change in Re value and Re axis, the present inventors have found a preferable production method in which a metal elastic roll is used as the first cooling roll, a metal rigid roll is used as the second cooling roll, and no bank is generated between these cooling rolls.

### <Re value and Re axis angle>

The present inventors have found that optimizing the production conditions in the extrusion molding process can control the molecular orientation, thereby allowing to control the Re value and the Re axis angle of the extruded resin laminated film to be small.

The present disclosure can provide an extruded resin laminated film having the following optical properties.

The Re value of at least a portion of the extruded resin laminated film of the present disclosure in the width direction is 50 nm or less, preferably 30 nm or less.

When the angle of the axis parallel to the extrusion direction of the extruded resin laminated film of the present disclosure is 0°, the absolute value of the slow axis angle of Re is 10° or less, preferably 7° or less, more preferably 6° or less, particularly preferably 5° or less, and most preferably 4° or less.

### <Overall temperature of thermoplastic resin laminate (TT) when peeled off from final cooling roll>

In the production method of the present disclosure, the overall temperature of the thermoplastic resin laminate (TT) when peeled off from the final cooling roll (third cooling roll in Fig. 3) is set to the range of 40 to 5°C lower than the glass transition temperature of the polycarbonate-containing layer (Tg (PC)). The temperature (TT) is preferably lower than (Tg (PC)) by 25 to 10°C.

If the temperature TT is too low relative to Tg (PC), the shape of the final cooling roll (the third cooling roll in Fig. 3) may be transferred to the extruded resin laminated film, which may deteriorate warpage. On the other hand, if the temperature TT when in contact with the final cooling roll (the third cooling roll in Fig. 3) is too high, the change in the Re axis of the extruded resin laminated film may become large. The temperature (TT) shall be measured by the method described in [Examples] below.

### <Relationship between peripheral velocity ratio, Re value, and Re axis>

In the present description, unless otherwise noted, the "peripheral velocity ratio" is the ratio of the peripheral velocity of any cooling roll other than the second cooling roll or the winding roll to the second cooling roll. The peripheral velocity of the second cooling roll is represented by V2, the peripheral velocity of the third cooling roll is represented by V3, and the peripheral velocity of the winding roll is represented by V4.

In the production method of the present disclosure, the overall temperature of the thermoplastic resin laminate (TT) when peeled off from the final cooling roll (third cooling roll in Fig. 3) is adjusted to a range of 40 to 5°C lower than the glass transition temperature of the polycarbonate-containing layer (Tg (PC)).

The present inventors performed various evaluations for the relationship between the peripheral velocity ratio of the third cooling roll to the second cooling roll (V3/V2) and the peripheral velocity ratio of the winding roll to the second cooling roll (V4/V2), and the Re value. As a result, it has been found that changes in the peripheral velocity ratio (V3/V2) and the peripheral velocity ratio (V4/V2) have a large influence on the Re value. In order to stably maintain 50 nm or less of the Re value of at least a portion of the width direction, it has been found that both the peripheral velocity ratio (V3/V2) and the peripheral velocity ratio (V4/V2) need to be 0.980 to 1.000. The peripheral velocity ratio (V3/V2) and the peripheral velocity ratio (V4/V2) are preferably 0.980 to 0.999.

Regarding the change in the Re axis, it has been found that if the overall temperature of the thermoplastic resin laminate (TT) is within the range of 40 to 5°C lower than the glass transition temperature of the polycarbonate-containing layer (Tg (PC)), there is little influence by the changes in peripheral velocity ratio (V3/V2) and peripheral velocity ratio (V4/V2).

### <Relationship between temperature (TT), peripheral velocity ratio, Re value, and Re axial direction>

It has been found that if molding is performed under the condition where the overall temperature of the thermoplastic resin laminate (TT) when peeled off from the final cooling roll (third cooling roll in Fig. 3) higher than the temperature range of 40 to 5°C lower than Tg (PC), the change in the Re axis tends to increase.

If the thermoplastic resin laminate peels off from the final cooling roll when the resin temperature is high, the resin is not sufficiently restrained and thus the resin is affected by the peripheral velocity ratio (V4/V2) not only in the extrusion direction but also in the width direction. Therefore, the change in the Re axis is considered to tend to become large.

### <In-plane retardation value (Re value)>

For an extruded resin laminated film for curved surface processing (heat bending) used as a protective film and the like for curved liquid crystal displays and touch panel displays, it is preferable that the Re value is small in consideration of optical distortion added during heat bending. Specifically, the Re value of at least a portion of the extruded resin laminated film in the width direction is preferably 50 nm or less, and more preferably 30 nm or less. At a Re value of more than 50 nm, optical distortion is added due to stress during heat bending, and if a displayed image is viewed through a polarizing filter such as polarized sunglasses, a rainbow uneven pattern or the like occurs, which may reduce visibility.

In an extruded resin laminated film used for cover members of in-vehicle head-up display (HUD) devices, from the viewpoint of reducing optical distortion, it is preferable that the Re value is smaller. Specifically, the Re value of at least a portion of the extruded resin laminated film in the width direction is preferably 50 nm or less, and more preferably 30 nm or less. In addition, when the angle of the axis parallel to the extrusion direction is 0°, the absolute value of the slow axis angle of Re is preferably 10° or less, more preferably 7° or less, even more preferably 6° or less, particularly preferably 5° or less, and most preferably 4° or less.

At more than 50 nm of a Re value and more than 10° of an absolute value of the slow axis angle of Re, if a displayed image is viewed through a polarizing filter such as polarized sunglasses, a rainbow uneven pattern or the like occurs, which may reduce visibility.

### <Amount of warpage of extruded resin laminated film>

In the production method of the present disclosure, the difference in glass transition temperature between the polycarbonate-containing layer and the (meth)acrylic resin-containing layer is set to be relatively small, the proportion of the total thickness of the (meth)acrylic resin-containing layer with respect to the total thickness is set to 50% or less, and the overall temperature of the thermoplastic resin laminate (TT) when peeled off from the final cooling roll is set to lower than the glass transition temperature of the polycarbonate-containing layer by 40 to 5°C. Production under such conditions can provide an extruded resin laminated film that is less likely to warp due to thermal changes. Specifically, it is possible to provide an extruded resin laminated film in which the amount of warpage after heating a square test specimen with a side length of 10 cm at 90°C for 10 minutes is 5 mm or less.

As described above, the present disclosure can provide an extruded resin laminated film that includes a polycarbonate-containing layer and a (meth)acrylic resin-containing layer, has small optical distortion (phase difference) and small change in the orientation axis of in-plane optical distortion, and suppresses the occurrence of warpage due to thermal changes, and a method for producing the same.

The extruded resin laminated film of the present disclosure has a (meth)acrylic resin-containing layer laminated on at least one side of the polycarbonate-containing layer, and thus is excellent in gloss, transparency, heat resistance, impact resistance, and scratch resistance.

The extruded resin laminated film of the present disclosure is less likely to warp due to thermal changes, and thus optical distortion and the change in the orientation axis of in-plane optical distortion are suppressed although curved surface processing (bending) is performed.

The extruded resin laminated film of the present disclosure is less likely to warp due to thermal changes, thus can withstand the process of forming a cured coating film that functions as a scratch-resistant layer and the like and the heating during thermoforming, and is excellent in productivity, durability, and thermoformability.

The extruded resin laminated film of the present disclosure is preferable as a protective film for liquid crystal displays, touch panel displays, and the like, and a cover member and the like for head-up display (HUD) devices.

The extruded resin laminated film of the present disclosure has small optical distortion (phase difference) and small change in the orientation axis of in-plane optical distortion, and thus, in the above applications, good visibility can be obtained even if the display screen is viewed through a polarizing filter such as polarized sunglasses.

The extruded resin laminated film of the present disclosure has small optical distortion (phase difference) and small change in the orientation axis of in-plane optical distortion, and is less likely to warp due to thermal changes. Therefore, even if curved surface processing (bending) is performed, in the above applications, good visibility can be obtained even if the display screen is viewed through a polarizing filter such as polarized sunglasses.

### [Application]

The extruded resin laminated film of the present disclosure can be used for any purpose.

The extruded resin laminated film of the present disclosure is preferable as a protective film for curved liquid crystal displays, touch panel displays, and the like. For example, it is preferable as a protective film for curved liquid crystal displays, touch panel displays, and the like, which are used for ATMs of financial institutions such as banks; vending machine; and digital information devices such as mobile phones (including smartphones), personal digital assistants (PDAs) such as tablet-type personal computers, digital audio players, portable game consoles, copy machines, fax machines, and car navigation systems.

The extruded resin laminated film of the present disclosure is also preferable as a cover member for in-vehicle head-up display (HUD) devices.

### Examples

Examples and Comparative Examples according to the present invention will be described.

### [Evaluation items and evaluation methods]

The evaluation items and the evaluation methods are as follows.

### (Copolymerization composition of SMA resin)

The copolymerization composition of the SMA resin was determined by the ¹³C-NMR method with a nuclear magnetic resonance apparatus ("GX-270" manufactured by JEOL Ltd.) according to the following procedure.

A sample solution was prepared by dissolving 1.5 g of SMA resin in 1.5 ml of deuterated chloroform, the ¹³C-NMR spectrum was measured under the conditions of 4,000 to 5,000 integrations in a room temperature environment, and the following values were determined.
- [Integrated intensity of carbon peak (around 127, 134, 143 ppm) of benzene ring (carbon number 6) in styrene unit] / 6
- [Integrated intensity of carbon peak (around 170 ppm) of carbonyl site (carbon number 2) in maleic anhydride unit] / 2
- [Integrated intensity of carbon peak (around 175 ppm) of carbonyl site (carbon number 1) in MMA unit] / 1

From the area ratio of the above values, the molar ratios of styrene units, maleic anhydride units, and MMA units in the sample were determined. From the obtained molar ratio and the mass ratio of each monomer unit (styrene unit : maleic anhydride unit : MMA unit = 104 : 98 : 100), the mass composition of each monomer unit in the SMA resin was determined.

### (Weight-average molecular weight (Mw) and molecular weight distribution (Mw/Mn))

The Mw of the resin and the molecular weight distribution (Mw/Mn), which is the ratio between the weight-average molecular weight (Mw) and the number-average molecular weight (Mn), were determined by the GPC method according to the following procedure. Tetrahydrofuran was used as an eluent, and two columns "TSKgel SuperMultipore HZM-M" and a column "SuperHZ4000" available from Tosoh Corporation connected in series were used as columns. An HLC-8320 (product number) available from Tosoh Corporation equipped with a differential refractometer detector (RI detector) was used as a GPC apparatus. 4 mg of the resin was dissolved in 5 ml of tetrahydrofuran to prepare a sample solution. The temperature of a column oven was set to 40°C, and 20 µl of the sample solution was injected thereto at the rate of 0.35 ml/min as an eluent flow to determine a chromatogram. Ten standard polystyrenes having a molecular weight within the range of 400 to 5,000,000 were measured by GPC, and a calibration curve showing the relationship between retention time and molecular weight was created. The Mw and the Mw/Mn were determined based on this calibration curve.

### (Triad syndiotacticity (rr) (rr percentage))

The (meth)acrylic resin was dissolved in deuterated chloroform, to prepare a sample solution. For the sample solution obtained, the ¹H-NMR spectrum was determined under conditions of room temperature and a cumulative number of 64 times using a nuclear magnetic resonance apparatus (ULTRA SHIELD 400 PLUS, available from Bruker Corporation). From the spectrum, an area (A0) of the region of 0.6 to 0.95 ppm and an area (AY) of the region of 0.6 to 1.35 ppm, when TMS was taken as 0 ppm, were measured. Then, the triad syndiotacticity (rr) was calculated by formula: (A0/AY) × 100.

### (Glass transition temperature (Tg))

The measurement was performed by putting 10 mg of the resin (composition) into an aluminum pan and using a differential scanning calorimeter ("DSC-50", available from Rigaku Corporation). After nitrogen substitution was carried out for 30 minutes or more, the temperature was temporarily raised from 25°C to 200°C at a rate of 20°C/min, retained for 10 minutes, and then cooled to 25°C under a 10 ml/min nitrogen flow (primary scanning). Then, the temperature was raised to 200°C at a rate of 10°C/min (secondary scanning), and the glass transition temperature (Tg) was calculated from the result obtained in the secondary scanning by a middle point method. When a plurality of Tg data were obtained in the resin composition containing two or more resins, the value derived from the resin as the main component was adopted as the Tg data.

### (Average particle size of rubber particles having a multilayered structure (RP))

After an ultrathin slice was cut out from the extruded resin laminated film containing the rubber particles having a multilayered structure (RP) with a diamond knife, and the butyl acrylate moiety was selectively stained with phosphotungstic acid, an image was captured using a transmission electron detector of a scanning electron microscope (SEM) ("JSM-7600", available from JEOL Ltd.). Thirty rubber particles having a multilayered structure (RP) showing the entire particles were selected at random, and the diameter of the stained portion was measured for each particle, to determine the average as an average particle size.

### (Amount of warpage of extruded resin laminated film)

A square test specimen with a side length of 10 cm was cut out from the obtained extruded resin laminated film so as to pass through the center of the extruded resin laminated film in the width direction. The directions of all sides were parallel or perpendicular to the extrusion direction. The obtained test specimen was left in a heating oven at 90°C for 10 minutes, then taken out from the heating oven and left in an environment of 23°C ± 3°C for 10 minutes or more. Thereafter, the test specimen was placed on the surface plate so that the methacrylic resin-containing layer was the top layer. The maximum value of the gap between the test specimen and the surface plate was measured using a thickness gauge, and this value was taken as the amount of warpage.

### (Re value and Re axis angle)

A square test specimen with a side length of 10 cm was cut out from the obtained extruded resin laminated film so as to pass through the center of the extruded resin laminated film in the width direction. The directions of all sides were parallel or perpendicular to the extrusion direction. After leaving this test specimen in an environment of 23°C ± 3°C for 10 minutes or more, using "WPA-100 (-L)" manufactured by Photonic Lattice, Inc., the in-plane retardation value (Re value) and the absolute value of the angle of the slow axis of the in-plane retardation were measured. The test specimen was set so that the four sides of the test specimen were horizontal or perpendicular to the measurement axis, and the angle of the axis where the extrusion direction was horizontal was set to 0°.

### (Overall temperature of thermoplastic resin laminate (TT))

The overall temperature of the thermoplastic resin laminate (TT) when peeled off from the third cooling roll was determined using an infrared thermometer. The determination position was the central portion in the width direction of the extruded resin laminated film.

### (Total light transmittance (Tt))

A 50 mm × 50 mm test specimen was cut out from the obtained extruded resin laminated film. The total light transmittance (Tt) of the test specimen was measured using "HM-150" manufactured by Murakami color research laboratory Co., Ltd.

### (Transmittance at wavelength of 1500 nm)

A 50 mm × 50 mm test specimen was cut out from the obtained extruded resin laminated film. Using "Shimadzu
Ultraviolet/Visible/Near Infrared Spectrophotometer UV-3600", manufactured by Shimadzu Corporation, the absorption spectrum of the extruded resin laminated film in the wavelength range of 300 to 3000 nm was measured, and the transmittance at a wavelength of 1500 nm was determined. As the transmittance at a wavelength of 1500 nm is lower, the infrared shielding property of the extruded resin laminated film is higher.

### [Material]

The materials used were as follows.

### <(Meth)acrylic resin>

### (PM1)

According to the method described in Preparation Example 2 of Japanese Unexamined Patent Application Publication No. 2016-94550, a (meth)acrylic resin (PM1) (polymethyl methacrylate, PMMA) having a Mw of 101000, a Mw/Mn of 1.87, a rr ratio of 52.0 %, a Tg of 120°C, and a content of MMA units of 100 mass% was obtained.

### (A1)

In accordance with the method described in Preparation Example 1 of Japanese Unexamined Patent Application Publication No. 2016-94550, a (meth)acrylic resin (A1) (polymethyl methacrylate, PMMA) with a Mw of 70000, Mw/Mn of 1.05, a rr percentage of 75.0%, a Tg of 130°C, and a content of methyl methacrylate (MMA) units of 100 mass% was obtained.

### (A2)

50 parts by mass of the (meth)acrylic resin (PM1) and 50 parts by mass of the (meth)acrylic resin (A1) were melt-kneaded, to obtain a (meth)acrylic resin (A2) (polymethyl methacrylate, PMMA) with a rr percentage of 63.5% and a Tg of 125°C.

### (A3)

80 parts by mass of the (meth)acrylic resin (PM1) and 20 parts by mass of (meth)acrylic resin (A1) were melt-kneaded to provide a (meth)acrylic resin (A3) (polymethyl methacrylate, PMMA) having a rr ratio of 56.6%, a Tg of 122°C, and a content of methyl methacrylate (MMA) units of 100 mass%.

### <SMA resin>

### (SMA1)

In accordance with the method described in International Patent Publication No. WO 2010/013557, an SMA resin (a styrene-maleic anhydride-MMA copolymer, styrene unit/maleic anhydride unit/MMA unit (mass ratio) = 56/18/26, Mw = 150,000, and Tg = 138°C) was obtained.

### (SMA2)

"XIRAN (registered trademark) 23110" manufactured by Polyscope Polymers B.V. was prepared.

### <Methacrylic resin composition (MR)>

A (meth)acrylic resin (PM1) and a SMA resin (SMA1) or (SMA2) were melt-kneaded to obtain the following two types of methacrylic resin compositions. The SMA ratio indicates the charging ratio (mass percentage) of the SMA resin to the total amount of the (meth)acrylic resin and the SMA resin.
(MR1) (PM1) / (SMA1) resin composition (SMA ratio of 70 mass%, Tg = 130°C),
(MR2) (PM1) / (SMA2) resin composition (SMA ratio of 50 mass%, Tg = 135°C).

### <Rubber particles having a multilayered structure (RP)>

### (RP1)

An innermost layer (RP-a1), an intermediate layer (RP-b1), and an outermost layer (RP-c1) composed of a copolymer having the following composition were sequentially formed to produce a three-layered acrylic multilayered rubber particle (RP1). The particle diameter was 0.23 µm.

The innermost layer (RP-a1): methyl methacrylate (MMA) units/methyl acrylate (MA) units/allyl methacrylate units as crosslinkable monomers (mass ratio) = 32.91/2.09/0.07,

The intermediate layer (RP-b1): butyl acrylate units/styrene units/allyl methacrylate units as crosslinkable monomers (mass ratio) = 37.00/8.00/0.90,

The outermost layer (RP-c1): methyl methacrylate (MMA) units/methyl acrylate (MA) units (mass ratio) = 18.80/1.20.

### <Dispersing particles (D)>

### (D1) Methacrylic copolymer particles, methyl methacrylate (MMA) units/methyl acrylate units (mass ratio) = 90/10, particle diameter: 0.11 µm.

### <Powder containing rubber particles having a multilayered structure (RD1)>

A latex containing rubber particles having a multilayered structure (RP1) and a latex containing dispersing particles (D1) were mixed at a solid mass ratio of 67:33. The mixed latex obtained was frozen at -30°C for 4 hours. The frozen latex was charged into a hot water of 90°C in an amount twice the amount of the frozen latex and dissolved to give a slurry. Thereafter, it was retained at 90°C for 20 minutes to be dehydrated and dried at 80°C, to obtain a powder containing rubber particles having a multilayered structure (RD1).

### <Infrared absorber>

As an infrared absorber, indium tin oxide (ITO) fine particles ("YMDS-874" manufactured by Sumitomo Metal Mining Co., Ltd.) were prepared.

### <(Meth)acrylic resin composition containing rubber particles having a multilayered structure (MRD1)>

100 parts by mass of a (meth)acrylic resin (A2) and 12 parts by mass of powder containing rubber particles having a multilayered structure (RD1) were melt-kneaded to obtain a (meth)acrylic resin composition containing rubber particles having a multilayered structure (MRD1).

### <Infrared absorber-added (meth)acrylic resin (A22)>

98 parts by mass of the (meth)acrylic resin (A2) and 2 parts by mass of the above-described infrared absorber were melt-kneaded to obtain an infrared absorber-added (meth)acrylic resin (A22).

### <Polycarbonate (PC1)>

"SD POLYCA (registered trademark) PCX", available from Sumika Styron Polycarbonate Limited (MFR at a temperature of 300°C under a load of 1.2 kg = 6.7 g/10 minutes and Tg = 150°C).

### [Examples 1 to 14 and Comparative Examples 1 to6] (Production of extruded resin laminated film)

An apparatus for production as shown in Fig. 3 was used to form an extruded resin laminated film.

A material of a (meth)acrylic resin-containing layer melted using a 65 mmcp single screw extruder (manufactured by Toshiba Machine Co., Ltd.), and polycarbonate (PC1) melted using a 150 mmcp single screw extruder (manufactured by Toshiba Machine Co., Ltd.) were laminated through a multi-manifold type die to coextrude a thermoplastic resin laminate in a molten state from a T-die.

Then, the molten thermoplastic resin laminate was sandwiched between the first cooling roll and the second cooling roll adjacent to each other, wound around the second cooling roll, sandwiched between the second cooling roll and the third cooling roll, and wound around the third cooling roll for cooling. After cooling, the extruded resin laminated film obtained was wound up by a pair of winding rolls. The polycarbonate-containing layer was brought into contact with the third cooling roll.

As described above, an extruded resin laminated film having a two type-two layer structure having a laminated structure of a (meth)acrylic resin-containing layer and a polycarbonate-containing layer was obtained.

In each example, as the material for the (meth)acrylic resin-containing layer, a (meth)acrylic resin (A1), a (meth)acrylic resin composition containing rubber particles having a multilayered structure (MRD1), an infrared absorber-added (meth)acrylic resin (A22), a (meth)acrylic resin composition (MR1), or a (meth)acrylic resin composition (MR2) was used.

The following metal rigid rolls and metal elastic rolls were prepared as the cooling roll.
(Rigidity R) a metal rigid roll made of commercially available stainless steel
(Elasticity R) a commercially available metal elastic roll consisting of a metal shaft roll made of stainless steel, a metal thin film (elastic outer cylinder) made of stainless steel that covers the outer peripheral surface of this shaft roll, and a fluid sealed between these shaft rolls and metal thin film (elastic outer cylinder)

In each example, changed were one or more of the conditions of: a combination of a first cooling roll and a second cooling roll; the peripheral velocity ratio (V3/V2) between the second cooling roll and the third cooling roll; the peripheral velocity ratio (V4/V2) between the second cooling roll and the winding roll; the overall temperature of the thermoplastic resin laminate (TT) when peeled off from the final cooling roll (specifically, the third cooling roll); a material of the (meth)acrylic resin-containing layer; the total thickness of extruded resin laminated film; the thickness of the (meth)acrylic resin-containing layer; and the proportion of the total thickness of (meth)acrylic resin-containing layer with respect to the total thickness.

In each example, the metal elastic roll was used as the third cooling roll.

In all examples, it was visually confirmed that no banks were generated between the first cooling roll and the second cooling roll.

The overall temperature of the thermoplastic resin laminate (TT) when peeled off from the final cooling roll was adjusted by controlling the temperatures of the second cooling roll and the third cooling roll.

The main production conditions and the evaluation results of the obtained extruded resin laminated film are shown in Tables 1 to 3. In each example, production conditions not listed in the table were regarded as common conditions.

**[Table 1]**

| Examples | 1 | 2 | 3 | 4 | 5 | 6 |
|---|---|---|---|---|---|---|
| First cooling roll | Elasticity R | Elasticity R | Elasticity R | Elasticity R | Elasticity R | Elasticity R |
| Second cooling roll | Rigidity R | Rigidity R | Rigidity R | Rigidity R | Rigidity R | Rigidity R |
| V3/V2 | 0.995 | 0.995 | 0.995 | 0.995 | 0.995 | 0.995 |
| V4/V2 | 0.990 | 0.990 | 0.990 | 0.990 | 0.990 | 0.990 |
| TT [°C] | 115 | 130 | 140 | 145 | 130 | 145 |
| Composition of (meth)acrylic resin-containing layer | MRD1 | MRD1 | A22 | A22 | A1 | A1 |
| A1 (rr ratio = 75.0%) [parts] | | | | | | 100 |
| A2 (rr ratio = 63.5%) [parts] | 100 | 100 | 98 | 98 | | |
| A3 (rr ratio = 56.6%) [parts] | | | | | 100 | |
| Powder containing rubber particles having a multilayered structure (RD1) [parts] | 12 | 12 | | | | |
| Infrared absorber [parts] | | | 2 | 2 | | |
| Layer configuration | 2 types 2 layers | 2 types 2 lavers | 2 types 2 lavers | 2 types 2 lavers | 2 types 2 layers | 2 types 2 lavers |
| Total thickness | 0.10 | 0.30 | 0.50 | 0.80 | 0.30 | 0.30 |
| Thickness of (meth)acrylic resin-containing layer | 0.04 | 0.05 | 0.06 | 0.07 | 0.07 | 0.07 |
| Ratio of total thickness of (meth)acrylic resin-containing layer | 40.0% | 16.7% | 12.0% | 8.8% | 23.3% | 23.3% |
| Tg (M) of (meth)acrylic resin-containing layer [°] | 125 | 125 | 125 | 125 | 122 | 130 |
| Tg (PC) of polycarbonate-containing layer [°] | 150 | 150 | 150 | 150 | 150 | 150 |
| Difference between Tg (M) and Tg (PC) [°] | 25 | 25 | 25 | 25 | 28 | 20 |
| Re value [nm] | 10 | 20 | 30 | 45 | 22 | 23 |
| Angle of Re axis [°] | 1 | 3 | 5 | 6 | 2 | 4 |
| Amount of warpage after heating [mm] | 4.0 | 2.0 | 0.6 | 0.4 | 4.0 | 0.5 |
| Total light transmittance (Tt) | - | - | 88% | 87% | - | - |
| Transmittance at a wavelength of 1500 nm | - | - | 48% | 45% | - | - |

**[Table 2]**

| Examples | 7 | 8 | 9 | 10 | 11 | 12 | 13 | 14 |
|---|---|---|---|---|---|---|---|---|
| First cooling roll | Elasticity R | Elasticity R | Elasticity R | Elasticity R | Elasticity R | Elasticity R | Elasticity R | Elasticity R |
| Second cooling roll | Rigidity R | Rigidity R | Rigidity R | Rigidity R | Rigidity R | Rigidity R | Rigidity R | Rigidity R |
| V3/V2 | 0.995 | 0.995 | 0.995 | 0.995 | 0.995 | 0.995 | 0.995 | 0.995 |
| V4/V2 | 0.990 | 0.990 | 0.990 | 0.990 | 0.990 | 0.990 | 0.990 | 0.990 |
| TT [°C] | 115 | 130 | 140 | 145 | 115 | 130 | 140 | 145 |
| Composition of (meth)acrylic resin-containing layer | MR1 | MR1 | MR1 | MR1 | MR2 | MR2 | MR2 | MR2 |
| Layer configuration | 2 types 2 layers | 2 types 2 layers | 2 types 2 layers | 2 types 2 layers | 2 types 2 layers | 2 types 2 layers | 2 types 2 layers | 2 types 2 layers |
| Total thickness | 0.10 | 0.30 | 0.50 | 0.80 | 0.10 | 0.30 | 0.50 | 0.80 |
| Thickness of (meth)acrylic resin-containing layer | 0.04 | 0.05 | 0.06 | 0.07 | 0.04 | 0.05 | 0.06 | 0.07 |
| Ratio of total thickness of (meth)acrylic resin-containing layer | 40.0% | 16.7% | 12.0% | 8.8% | 40.0% | 16.7% | 12.0% | 8.8% |
| Tg (M) of (meth)acrylic resin-containing layer [°] | 130 | 130 | 130 | 130 | 135 | 135 | 135 | 135 |
| Tg (PC) of polycarbonate-containing layer [°] | 150 | 150 | 150 | 150 | 150 | 150 | 150 | 150 |
| Difference between Tg (M) and Tg (PC) [°] | 20 | 20 | 20 | 20 | 15 | 15 | 15 | 15 |
| Re value [nm] | 12 | 20 | 25 | 42 | 11 | 23 | 29 | 48 |
| Angle of Re axis [°] | 2 | 2 | 6 | 7 | 2 | 3 | 4 | 6 |
| Amount of warpage after heating [mm] | 2.0 | 2.0 | 0.6 | 0.3 | 3.0 | 2.0 | 0.5 | 0.2 |

**[Table 3]**

| Comparative Examples | 1 | 2 | 3 | 4 | 5 | 6 |
|---|---|---|---|---|---|---|
| First cooling roll | Elasticity R | Elasticity R | Elasticity R | Elasticity R | Rigidity R | Elasticity R |
| Second cooling roll | Rigidity R | Rigidity R | Rigidity R | Rigidity R | Rigidity R | Rigidity R |
| V3/V2 | 1.005 | 0.99 | 0.99 | 0.99 | 0.99 | 0.995 |
| V4/V2 | 0.990 | 1.005 | 0.990 | 0.990 | 0.990 | 0.990 |
| TT [°C] | 130 | 130 | 155 | 105 | 140 | 150 |
| Composition of (meth)acrylic resin-containing layer | MR2 | MR2 | MR2 | MR2 | MR2 | MR2 |
| Layer configuration | 2 types 2 layers | 2 types 2 layers | 2 types 2 layers | 2 types 2 layers | 2 types 2 layers | 2 types 2 layers |
| Total thickness | 0.30 | 0.30 | 2.00 | 0.30 | 0.50 | 0.30 |
| Thickness of (meth)acrylic resin-containing layer | 0.05 | 0.05 | 0.11 | 0.05 | 0.06 | 0.05 |
| Ratio of total thickness of (meth)acrylic resin-containing layer | 16.7% | 16.7% | 5.5% | 16.7% | 12.0% | 16.7% |
| Tg (M) of (meth)acrylic resin-containing layer [°] | 135 | 135 | 135 | 135 | 135 | 135 |
| Tg (PC) of polycarbonate-containing layer [°] | 150 | 150 | 150 | 150 | 150 | 150 |
| Difference between Tg (M) and Tg (PC) [°] | 15 | 15 | 15 | 15 | 15 | 15 |
| Re value [nm] | 135 | 135 | 30 | 10 | 60 | 11 |
| Angle of Re axis [°] | 1 | 2 | 11 | 1 | 8 | 11 |
| Amount of warpage after heating [mm] | 2.0 | 3.0 | 0.1 | 6.0 | 0.6 | 1.0 |

### [Summary of results]

In Examples 1 to 14, extruded resin laminated films each including a (meth)acrylic resin-containing layer laminated on one side of a polycarbonate-containing layer were produced, wherein no bank was generated between the first cooling roll and the second cooling roll, the metal elastic roll was used as the first cooling roll, the metal rigid roll was used as the second cooling roll, the overall temperature of the thermoplastic resin laminate (TT) when peeled off from the final cooling roll was set to lower than the glass transition temperature of the polycarbonate-containing layer by 40 to 5°C, and both V3/V2 and V4/V2 were set to 0.980 to 1.000.

The extruded resin laminated films obtained in these Examples had 0.1 to 0.8 mm of the total thickness, 0.04 mm or more of the thickness of the (meth)acrylic resin-containing layer, 50% or less of the proportion of the total thickness of the (meth)acrylic resin-containing layer with respect to the total thickness, 50 nm or less of the in-plane retardation value of at least a portion of the width direction, 10° or less of the absolute value of the slow axis angle of the in-plane retardation when the angle of the axis parallel to the extrusion direction is 0°, and 5 mm or less of the amount of warpage after heating a square test specimen with a side length of 10 cm at 90°C for 10 minutes.

In these examples, it was possible to produce an extruded resin laminated film in which optical distortion (phase difference) and the change in the orientation axis of in-plane optical distortion were small, and the occurrence of warpage due to thermal changes was suppressed.

In Comparative Example 1 where V3/V2 was more than 1.000 and Comparative Example 2 where V4/V2 was more than 1.000, the obtained extruded resin laminated film had a Re value of more than 50 nm, which was poor.

In Comparative Examples 3 and 6, the overall temperature of the thermoplastic resin laminate (TT) when peeled off from the roll was set higher than the range of 40 to 5°C lower than the glass transition temperature of the polycarbonate-containing layer. In Comparative Example 3, the thickness was further set to more than 0.8 mm. In the extruded resin laminated films obtained in these comparative examples, when the angle of the axis parallel to the extrusion direction was set to 0°, the absolute value of the angle of the slow axis of in-plane retardation was more than 10°, which was poor.

In Comparative Example 4, in which the overall temperature of the thermoplastic resin laminate (TT) when peeled off from the final cooling roll was lower than the range of 40 to 5°C lower than the glass transition temperature of the polycarbonate-containing layer, regarding the obtained extruded resin laminated film, an amount of warpage after heating a square test specimen with a side length of 10 cm at 90°C for 10 minutes was more than 5 mm, which was poor.

In Comparative Example 5 in which metal rigid rolls were used as the first cooling roll and the second cooling roll, the obtained extruded resin laminated film had a Re value of more than 50 nm, which was poor.

The present invention is not limited to the above embodiments and Examples and can be appropriately changed within a range not deviated from the gist of the present invention.

This application is based upon and claims the benefit of priority from Japanese patent application No. 2021-159709, filed on September 29, 2021, the entire disclosure of which is incorporated herein in its entirety by reference.

### Reference Signs List

11 T-DIE
12 FIRST COOLING ROLL
13 SECOND COOLING ROLL
14 THIRD COOLING ROLL
15 WINDING ROLL
16 EXTRUDED RESIN LAMINATED FILM

## Claims

1. A method for producing an extruded resin laminated film having a laminated structure in which a (meth)acrylic resin-containing layer is laminated on at least one side of a polycarbonate-containing layer, the method comprising the step of:
coextruding a thermoplastic resin laminate having the laminated structure from a T-die in a molten state; cooling the molten thermoplastic resin laminate by using three or more cooling rolls adjacent to one another by repeating an operation multiple times from n = 1, the operation including sandwiching the molten thermoplastic resin laminate between the n-th (however, n ≥ 1) cooling roll and the n+1-th cooling roll, and winding around the n+1-th cooling roll; and winding up the extruded resin laminated film obtained after cooling by a winding roll, wherein
the thermoplastic resin laminate is sandwiched between the first cooling roll and the second cooling roll without generating a bank;
a metal elastic roll having an elastic outer cylinder made of a metal thin film on an outer peripheral portion is used as the first cooling roll, and a metal rigid roll is used as the second cooling roll;
an overall temperature of the thermoplastic resin laminate (TT) when peeled off from the final cooling roll is lower than a glass transition temperature of the polycarbonate-containing layer by 40 to 5°C;
both a peripheral velocity ratio (V3/V2) between a peripheral velocity (V3) of the third cooling roll and a peripheral velocity (V2) of the second cooling roll, and a peripheral velocity ratio (V4/V2) between a peripheral velocity (V4) of the winding roll and a peripheral velocity (V2) of the second cooling roll are set to 0.980 to 1.000; and
for the extruded resin laminated film, a total thickness is 0.1 to 0.8 mm, a thickness of the (meth)acrylic resin-containing layer is 0.04 mm or more, a proportion of a total thickness of the (meth)acrylic resin-containing layer with respect to the total thickness is 50% or less, an in-plane retardation value of at least a portion of a width direction is 50 nm or less, an absolute value of a slow axis angle of the in-plane retardation is 10° or less when an angle of an axis parallel to an extrusion direction is 0°, and an amount of warpage after heating a square test specimen with a side length of 10 cm at 90°C for 10 minutes is 5 mm or less.

2. The method for producing an extruded resin laminated film according to claim 1, wherein the extruded resin laminated film has a laminated structure in which the (meth)acrylic resin-containing layer containing a (meth)acrylic resin (A) with a triad syndiotacticity (rr) of 56% or more is laminated on at least one side of the polycarbonate-containing layer.

3. The method for producing an extruded resin laminated film according to claim 2, wherein the (meth)acrylic resin (A) has a content of methyl methacrylate units of 90 mass% or more and a glass transition temperature of 122°C or more.

4. The method for producing an extruded resin laminated film according to any one of claims 1 to 3, wherein the (meth)acrylic resin-containing layer contains rubber particles having a multilayered structure.

5. The method for producing an extruded resin laminated film according to claim 1, wherein the (meth)acrylic resin-containing layer contains 5 to 90 mass% of (meth)acrylic resin and 95 to 10 mass% of a copolymer containing a structural unit derived from an aromatic vinyl compound and a structural unit derived from maleic anhydride, and has a glass transition temperature of 122°C or more.

6. The method for producing an extruded resin laminated film according to claim 5, wherein the copolymer contains 50 to 85 mass% of the structural unit derived from an aromatic vinyl compound and 15 to 50 mass% of the structural unit derived from maleic anhydride.

7. The method for producing an extruded resin laminated film according to claim 6, wherein the copolymer contains 50 to 84 mass% of the structural unit derived from an aromatic vinyl compound, 15 to 49 mass% of the structural unit derived from maleic anhydride, and 1 to 35 mass% of a structural unit derived from (meth)acrylic acid ester.

8. An extruded resin laminated film comprising a (meth)acrylic resin-containing layer laminated on at least one side of a polycarbonate-containing layer, wherein
a total thickness is 0.1 to 0.8 mm, a thickness of the (meth)acrylic resin-containing layer is 0.04 mm or more, a proportion of a total thickness of the (meth)acrylic resin-containing layer with respect to the total thickness is 50% or less;
a glass transition temperature of the (meth)acrylic resin-containing layer is 122°C or more;
an in-plane retardation value of at least a portion of a width direction is 50 nm or less;
an absolute value of a slow axis angle of the in-plane retardation is 10° or less when an angle of an axis parallel to an extrusion direction is 0°; and
an amount of warpage after heating a square test specimen with a side length of 10 cm at 90°C for 10 minutes is 5 mm or less.

9. The extruded resin laminated film according to claim 8, wherein a difference between a glass transition temperature of the polycarbonate-containing layer and a glass transition temperature of the (meth)acrylic resin-containing layer is 28°C or less.

10. The extruded resin laminated film according to claim 8 or 9 to be used for a head-up display device, wherein
the (meth)acrylic resin-containing layer contains an infrared absorber; and
the extruded resin laminated film has a total light transmittance of 80% or more and a transmittance of 60% or less at a wavelength of 1500 nm.

11. An extruded resin laminated film with a scratch-resistant layer, comprising a scratch-resistant layer on at least one surface of the extruded resin laminated film according to any one of claims 8 to 10.
